(19) Europäisches Patentamt
European Patent Office
Office européen des brevets

(11) Veröffentlichungsnummer : **0 339 396 B1**

(12) # EUROPÄISCHE PATENTSCHRIFT

(45) Veröffentlichungstag der Patentschrift : **11.03.92 Patentblatt 92/11**

(51) Int. Cl.$^5$ : **C08G 18/79,** C08G 18/18, C08G 18/80, C09D 175/00

(21) Anmeldenummer : **89106695.3**

(22) Anmeldetag : **14.04.89**

(54) **Verfahren zur Herstellung von Isocyanuratgruppen aufweisenden Polyisocyanaten.**

(30) Priorität : **27.04.88 DE 3814167**

(43) Veröffentlichungstag der Anmeldung : **02.11.89 Patentblatt 89/44**

(45) Bekanntmachung des Hinweises auf die Patenterteilung : **11.03.92 Patentblatt 92/11**

(84) Benannte Vertragsstaaten : **BE DE ES FR GB IT NL**

(56) Entgegenhaltungen :
**EP-B- 0 166 173**
**DE-A- 3 100 263**
**DE-A- 3 227 489**

(73) Patentinhaber : **BAYER AG**
**W-5090 Leverkusen 1 Bayerwerk (DE)**

(72) Erfinder : **Scholl, Hans Joachim, Dr.**
**Am Feldrain 5**
**W-5000 Köln 80 (DE)**
Erfinder : **Pedain, Josef, Dr.**
**Haferkamp 6**
**W-5000 Köln 80 (DE)**

EP 0 339 396 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein neues Verfahren zur Herstellung von Isocyanuratgruppen aufweisenden Polyisocyanaten durch Trimerisierung eines Teils der Isocyanatgruppen von organischen Diisocyanaten mit aliphatisch und/oder cycloaliphatisch gebundenen Isocyanatgruppen.

Verfahren zur Trimerisierung organischer Isocyanate sind in großer Zahl bekannt (J.H. Saunders und K.C. Frisch, Polyurethanes Chemistry and Technology, S. 94 ff (1962)). Als Katalysatoren für die Trimerisierung sind starke organische Basen geeignet, so z.B. die alkalisch wirkenden Metallsalze von Carbonsäuren, Metallalkoholate, Metallphenolate, Alkalimetallcarbonate, tert. Amine, tert. Phosphine und die "Onium"-Verbindungen von Stickstoff und Phosphor sowie basische Heterocyclen dieser Elemente.

Die Verwendung von quaternären Ammoniumhydroxiden als Katalysator für die Trimerisierung von Isocyanatgruppen ist mehrfach vorbeschrieben. So werden gemäß JP-PS 601 337 (US-PS 3 487 080) quaternäre Ammoniumhydroxide zusammen mit bestimmten Cokatalysatoren verwendet, wobei in den Ausführungsbeispielen vor allem die Teiltrimerisierung von aromatischen Diisocyanaten gezeigt wird.

Benutzt man die Katalysatoren, die in den Beispielen dieser Patentschrift zur Trimerisierung benutzt werden zur Umsetzung von HDI und verfährt wie dort angegeben, so entstehen überwiegend getrübte, für Lackanwendungen unbrauchbare Produkte.

Das Verfahren der EP-A-10 589 stellt eine Weiterentwicklung des Verfahrens der genannten japanischen Patentschrift dar. Gemäß dieser Vorveröffentlichung werden als Katalysatoren für die Trimerisierung von HDI Hydroxyalkyl-Substituenten aufweisende quaternäre Ammoniumhydroxide verwendet. HDI läßt sich hiermit ausgezeichnet trübungsfrei trimerisieren. Nachteilig bei diesem Verfahren ist, daß sich die Hydroxyalkylammoniumhydroxide nur sehr schwierig farblos herstellen lassen und in verhältnismäßig großen Mengen bis 0,6 % angewendet werden müssen. Die Verfahrensprodukte, d.h. die von überschüssigem Ausgangsdiisocyanat befreiten, Isocyanuratgruppen aufweisenden Polyisocyanate können daher unter Umständen eine gelbliche Färbung aufweisen.

Die EP-A-47 452 beschreibt die Herstellung von Mischtrimerisaten auf Basis von HDI und IPDI ebenfalls, wie aus den Ausführungsbeispielen ersichtlich, mit vergleichsweise hohe Mengen an Katalysatoren.

Andere bekannte Verfahren zur Herstellung von Isocyanuratgruppen aufweisenden Polyisocyanaten auf Basis von HDI haben ebenfalls schwerwiegende Nachteile. So werden beispielsweise in GB-PS 920 080, DE-OS 3 100 262, DE-OS 3 219 608 oder DE-OS 3 240 613 Verfahren zur Trimerisierung von HDI unter Verwendung von metallhaltigen Katalysatoren und von Cokatalysatoren wie Phenolen, Alkoholen oder tert. Aminen beschrieben. Die Metallverbindungen lassen sich aus den Endprodukten nicht oder nur mittels sehr aufwendigen Verfahren entfernen und können spätere Anwendungen ebenso wie die Haltbarkeit der Verfahrensprodukte empfindlich stören. Im übrigen führt die Verwendung von aktive Wasserstoffatome aufweisenden Cokatalysatoren zu Nebenreaktionen unter Verbrauch wertvoller Isocyanatgruppen. Dies gilt auch für das Verfahren der EP-A-155 559, bei welchem Ammoniumsalze von organischen Säuren als Katalysator unter gleichzeitiger Mitverwendung von hohen Anteilen an alkoholischen Verbindungen eingesetzt werden.

Bei den Verfahren der EP-A-57 653, EP-A-89 297 und EP-A-187 105 werden siliziumorganische Katalysatoren in vergleichsweise hohen Mengen eingesetzt. Auch diese Verbindungen können nicht restlos aus dem Verfahrensprodukt entfernt werden und bei dessen Verwendung zu Störungen führen.

Es war daher die der Erfindung zugrundeliegende Aufgabe, ein neues Verfahren zur teilweisen Trimerisierung der Isocyanatgruppen von organischen Diisocyanaten mit aliphatisch und/oder cycloaliphatisch gebundenen Isocyanatgruppen zur Verfügung zu stellen, welches folgende Vorteile in sich vereinigt:

– Die Verfahrensprodukte sollten praktisch farblos sein, d.h. eine Farbzahl (HAZEN) nach DIN 53 409 von unter 100 aufweisen.

– Die Verfahrensprodukte sollten frei von Trübungen sein und sich in den üblichen Lacklösungsmitteln trübungsfrei lösen.

– Die Verfahrensprodukte sollten keine Metallionen enthalten.

– Das Verfahren sollte unter Verwendung von minimalen Mengen an Katalysatoren durchführbar sein, ohne auf die Mitverwendung von hohen Mengen an Isocyanatgruppen verbrauchenden Cokatalysatoren zwingend angewiesen zu sein.

Wie jetzt überraschenderweise gefunden wurde, konnte diese Aufgabe mit dem nachstehend näher beschriebenen erfindungsgemäßen Verfahren gelöst werden.

Gegenstand der Erfindung ist ein Verfahren zur Herstellung von Isocyanuratgruppen aufweisenden Polyisocyanaten mit aliphatisch und/oder cycloaliphatisch gebundenen Isocyanatgruppen durch Trimerisierung eines Teils der Isocyanatgruppen von organischen Diisocyanaten mit aliphatisch und/oder cycloaliphatisch gebundenen Isocyanatgruppen in Gegenwart eines, die Trimerisierung beschleunigenden Katalysators und Abbruch der Trimerisierungsreaktion beim jeweils erwünschten Trimerisierungsgrad durch Zugabe eines Katalysatorengifts dadurch gekennzeichnet, daß man als Katalysator quaternäre Ammoniumfluoride verwendet.

Von erfindungswesentlicher Bedeutung ist die Verwendung des neuen Trimerisationskatalysators quaternäres Ammoniumfluorid. Grundsätzlich geeignet sind alle beliebigen quaternären Ammoniumfluoride. Die Substituenten am Stickstoffatom können Alkyl-, Aryl-Aralkylgruppen oder eine beliebige Kombination derartiger Gruppen sein. Auch quaternäre Fluoride auf Basis von heterocyclischen Aminen sind geeignet.

Zu den bevorzugten Katalysatoren gehören Verbindungen der allgemeinen Formel

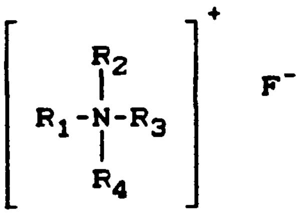

für welche

$R_1$, $R_2$, $R_3$ und $R_4$ für gleiche oder verschiedene Alkylreste mit 1 bis 18, insbesondere 2 bis 8 Kohlenstoffatomen stehen,

oder für welche

$R_1$, $R_2$ und $R_3$ für gleiche oder verschiedene Alkylreste mit 1 bis 18, insbesondere 1 bis 4 Kohlenstoffatomen, besonders bevorzugt für Methylgruppen stehen und

$R_4$ für einen Benzylrest steht.

Zu den geeigneten bzw. bevorzugt geeigneten Katalysatoren gehören beispielsweise Tetramethylammoniumfluorid, Tetraethylammoniumfluorid, Tetra-n-propylammoniumfluorid, Tetra-n-butylammoniumfluorid, N,N,N-Trimethyl-N-cyclohexylammoniumfluorid, N,N,N-Trimethyl-N-benzylammoniumfluorid, N,N,N-Trimethyl-N-phenylammoniumfluorid, N,N,N-Trimethyl-N-stearylammoniumfluorid, N,N′-Dimethyl-triethylendiamin-difluorid oder N-Methyl-triethylendiamin-monofluorid. Beliebige Gemische der beispielhaft genannten Katalysatoren können selbstverständlich ebenfalls verwendet werden.

Besonders bevorzugt sind N,N,N,N-Tetra-n-butylammoniumfluorid und N,N,N′-Trimethyl-N-benzylammoniumfluorid. Vorzugsweise erfolgt die Zugabe des Katalysators zu den zu trimerisierenden Ausgangsdiisocyanaten in Form von 0,1 bis 2 gew.-%igen Lösungen in geeigneten Lösungsmitteln wie z.B. 2-Ethylhexandiol-1,3, Acetonitril oder Dimethylformamid.

Die Katalysatoren können gegebenenfalls auch in auf geeigneten Trägermaterialien wie z.B. Kieselgel adsorbierter Form verwendet werden, in welchem Falle ihre Entfernung im Anschluß an die Desaktivierung beispielsweise durch Filtration erfolgen kann.

Die Menge des eingesetzten Katalysators liegt beim erfindungsgemäßen Verfahren, bezogen auf zum Einsatz gelangendes Diisocyanat, bei weniger als 0,1 Gew.-%. Vorzugsweise werden die Katalysatoren in einer Menge von 0,001 bis 0,02 Gew.-%, bezogen auf eingesetztes Diisocyanat, verwendet.

Das erfindungsgemäße Verfahren eignet sich zur Teiltrimerisierung beliebiger organischer Diisocyanate mit aliphatisch und/oder cycloaliphatisch gebundenen Isocyanatgruppen. Für das erfindungsgemäße Verfahren geeignete Ausgangsdiisocyanate sind insbesondere aliphatische oder cycloaliphatische Diisocyanate eines über 139, vorzugsweise von 140 bis 250 liegenden Molekulargewichts wie z.B. Tetramethylendiisocyanat, Hexamethylendiisocyanat (HDI), Dodecanmethylendiisocyanat, Cyclobutan-1,3-diisocyanat, Cyclohexan-1,3- und -1,4-diisocyanat, 1-Isocyanato-3,3,5-trimethyl-5-isocyanatomethyl-cyclohexan (IPDI), Perhydro-2,4- und/oder -2,6-diisocyanatotoluol oder Perhydro-2,4′- und/oder -4,4′-diisocyanatodiphenylmethan oder beliebige Gemische dieser Diisocyanate.

Besonders bevorzugt wird 1,6-Diisocyanatohexan (HDI) als Ausgangsdiisocyanat eingesetzt.

Das vorzugsweise unter Inertgasatmosphäre (z.B. Stickstoff) ablaufende, erfindungsgemäße Verfahren wird vorzugsweise, vom gegebenenfalls vorliegenden Lösungsmittel für den Katalysator abgesehen, lösungsmittelfrei innerhalb des Temperaturbereichs von 0 bis 100°C, insbesondere von 20 bis 80°C durchgeführt, kann jedoch auch in Gegenwart von inerten Lösungsmitteln wie z.B. Kohlenwasserstoffen wie Toluol oder Xylol oder Estern, wie z.B. Butylacetat, erfolgen.

Die Trimerisierungsreaktion wird vorzugsweise innerhalb der genannten Temperaturbereiche bis zum Erreichen eines Trimerisierungsgrades von 10 bis 40, vorzugsweise 20 bis 30 % durchgeführt. Unter "Trimerisierungsgrad" ist hierbei der Prozentsatz der Isocyanatgruppen im Ausgangsdiisocyanat zu verstehen, die in Isocyanurat überführt werden. Der Trimerisierungsgrad kann während der Trimerisierungsreaktion beispielsweise durch fortlaufende Bestimmung des Brechungsindex, oder des NCO-Gehaltes des Reaktionsansatzes

verfolgt werden.

Zur Beendigung der Trimerisierungsreaktion wird im allgemeinen dem Reaktionsgemisch ein geeignetes Katalysatorgift zugefügt. Geeignete Katalysatorgifte sind alle beliebigen Verbindungen, die mit quaternären Ammoniumfluoriden chemischen Umsetzungen eingehen, wie z.B. Alkylchlorsilane wie Ethylchlorsilan oder Calciumchlorid oder Substanzen, welche quaternäre Ammoniumfluoride adsorptiv binden, wie beispielsweise Kieselgel. Geeignete Katalysatorengifte sind aber auch beliebige organische Säuren bzw. Säurechloride, die die erfindungsgemäßen Katalysatoren in ihrer Wirkung desaktivieren, z.B. Sulfonsäuren wie beispielsweise Benzol- oder Toluolsulfonsäure oder ihre Chloride oder saure Ester der phosphorigen Säure oder der Phosphorsäure wie beispielsweise Dibutylphosphit, Dibutylphosphat oder Di-(2-ethylhexyl)-phosphat. Die beispielhaft genannten, mit den Katalysatoren unter deren Desaktivierung chemisch reagierenden Desaktivatoren werden dem Reaktionsgemisch im allgemeinen in einer dem Katalysator zumindest äquivalenten Menge zugefügt. Da die Katalysatoren jedoch während der Trimerisierungsreaktion teilweise desaktiviert werden, ist oftmals die Zugabe einer unteräquivalenten Menge des Desaktivators ausreichend. Die mit den Katalysatoren chemisch unter deren Desaktivierung reagierenden Katalysatorengifte sind gegenüber den beispielhaft genannten, absorbierenden Substanzen bevorzugt, insbesondere da im Falle von deren Verwendung im allgemeinen ihre nachträgliche Entfernung, beispielsweise durch Filtration, erforderlich wäre.

Nach der Desaktivierung wird überschüssiges Diisocyanat, insbesondere im Falle der bevorzugten lösungsmittelfreien Durchführung des Verfahrens, vorzugsweise durch eine geeignete Maßnahme wie z.B. Extraktion (beispielsweise unter Verwendung von n-Hexan als Extraktionsmittel) oder vorzugsweise Dünnschichtdestillation im Hoch vakuum bis auf einen Restgehalt von maximal 2,0, vorzugsweise maximal 0,5 und besonders bevorzugt von weniger als 0,2 Gew.-% freies Ausgangsdiisocyanat entfernt.

Die bevorzugten erfindungsgemäßen Verfahrensprodukte auf Basis von HDI stellen farblose Flüssigkeiten einer Farbzahl (HAZEN) nach DIN 53 409 von unter 100, im allgemeinen von unter 50, eines Isocyanatgehalts von 10 bis 24 Gew.-% und einer Viskosität bei 23°C von 500 bis 10.000 mPa.s dar.

Da bei der Durchführung des erfindungsgemäßen Verfahrens nur äußerst geringe Katalysatormengen eingesetzt werden, kann auch die Menge des Desaktivators, d.h. des Katalysatorengifts entsprechend gering gehalten werden, was zur Folge hat, daß die erfindungsgemäßen Verfahrensprodukte nur äußerst geringe Mengen an Nebenprodukten, die aus Katalysator und Katalysatorgift entstehen, enthalten, die gelöst bleiben und bei der späteren Verwendung der Verfahrensprodukte nicht stören. Auch bei Verwendung von technischem HDI, welches nicht vorab durch Destillation über schwach basischen Verbindungen wie Metalloxiden oder Natriumhydrogencarbonat einer üblichen Reinigungsoperation zwecks Entfernung von Spuren an chlorhaltigen Verbindungen unterzogen worden ist, werden klare und farblose Verfahrensprodukte erhalten. Wegen ihrer niedrigen Viskosität sind die Verfahrensprodukte insbesondere zur Herstellung von lösungsmittelfreien oder lösungsmittelarmen Zweikomponenten-Polyurethanlacken geeignet.

Bei der Verwendung der erfindungsgemäßen Verfahrensprodukte können diese in mit Blockierungsmitteln für Isocyanatgruppen blockierter Form verwendet werden. Geeignete Blockierungsmittel sind beispielsweise die in EP-A-10 589, Seite 15, Zeilen 14-26 beispielhaft genannten Verbindungen.

Die erfindungsgemäßen Verfahrensprodukte dienen insbesondere in Kombination mit den aus der Polyurethanlacktechnik bekannten Polyhydroxypolyestern, Polyhydroxypolyethern und insbesondere Polyhydroxypolyacrylaten zur Herstellung von hochwertigen Zweikomponenten-Polyurethanlacken, wobei diese Lacke neben den genannten höhermolekularen Polyhydroxylverbindungen auch niedermolekulare, vorzugsweise aliphatische Polyole enthalten können. Insbesondere Kombinationen der erfindungsgemäßen Verfahrensprodukte mit Polyhydroxypolyacrylaten stellen wertvolle Zweikomponenten-Bindemittel für hochwertige, äußerst wetterbeständige Autoreparaturlacke dar.

Auch Polyamine, insbesondere in blockierter Form als Polyketimine oder Oxazolidine sind denkbare Reaktionspartner für die erfindungsgemäßen Verfahrensprodukte.

Die Mengenverhältnisse, in welchen die erfindungsgemäßen, gegebenenfalls blockierten Polyisocyanate und die genannten Reaktionspartner bei der Herstellung von Polyurethanlacken umgesetzt werden, werden im allgemeinen so gewählt, daß auf eine (gegebenenfalls blockierte) Isocyanatgruppe 0,8-3, vorzugsweise 0,9-1,8, Hydroxyl-, Amino- und/oder Carboxylgruppen entfallen.

Zur Beschleunigung der Aushärtung können in bekannter Weise die in der Isocyanatchemie üblichen Katalysatoren verwendet werden, wie z.B. tert.- Amine wie Triethylamin, Pyridin, Methylpyridin, Benzyldimethylamin, N,N-Dimethylaminocyclohexan, N-Methylpiperidin, Pentamethyldiethylentriamin, N,N′-Endoethylenpiperazin, N,N′-Dimethylpiperazin oder Metallsalze wie Eisen(III)-chlorid, Zinkchlorid, Zink-2-ethylcaproat, Zinn(II)-2-ethylcaproat, Dibutylzinn(IV)-dilaurat oder Molybdänglykolat.

In blockierter Form werden die erfindungsgemäßen Verfahrensprodukte in Kombination mit Polyhydroxylverbindungen der genannten Art insbesondere zur Herstellung von Einbrennlacken verwendet, die in Abhängigkeit vom eingesetzten Blockierungsmittel bei Temperaturen von 80 bis 180°C zu hochwertigen

Lacküberzügen ausgehärtet werden können.

Zur Herstellung der gebrauchsfertigen Lacke werden gegebenenfalls blockiertes Polyisocyanat, polyfunktioneller Reaktionspartner, gegebenenfalls Katalysator für die Isocyanat-Polyaddition und die üblichen Zusätze, wie z.B. Pigmente, Farbstoffe, Füllstoffe und Verlaufmitel miteinander auf einem üblichen Mischaggregat, wie z.B. auf einer Sandmühle entweder mit oder ohne Lösungs- und Verdünnungsmittel gut vermischt und homogenisiert.

Die Anstrich- und Überzugsmittel können in Lösung oder aus der Schmelze, oder in fester Form nach den üblichen Methoden wie z.B. Streichen, Rollen, Gießen, Spritzen, dem Wirbelsinterverfahren oder dem elektrostatischen Pulversprühverfahren auf den zu beschichtenden Gegenstand aufgebracht werden.

Die die erfindungsgemäßen Polyisocyanate enthaltenden Lacke ergeben Filme, die überraschend gut auf metallischem Untergrund haften, besonders lichtecht, wärmefarbstabil und sehr abriebfest sind. Darüber hinaus zeichnen sie sich durch große Härte, Elastizität, sehr gute Chemikalienbeständigkeit, hohen Glanz, ausgezeichnete Wetterbeständigkeit und gute Pigmentierbarkeit aus.

In den nachfolgenden Beispielen beziehen sich alle Prozentangaben auf Gewichtsprozente.

Katalysatorzusammensetzungen

Katalysatorlösung A:

0,5 Gew.-% N,N,N-Trimethyl-N-benzylammoniumfluorid (Fa. Fluka GmbH) in 2-Ethylhexandiol-1,3.

Katalysatorlösung B:

1 Gew.-% N,N,N-Trimethyl-N-benzylammoniumfluorid in 2-Ethylhexandiol-1,3.

Katalysator C:

Tetra-n-butylammoniumfluorid auf Kieselgel, -1,1 mmol $F^{-}$/g Harz (Fa. Fluka GmbH).

Katalysatorlösung D:

1 Gew.-% Tetra-n-butylammoniumfluorid in Acetonitril.

Beispiele

Beispiel 1

1680 g (10 Mol) HDI werden unter Stickstoffatmosphäre auf 40°C erwärmt. Anschließend läßt man 12 g Katalysatorlösung A innerhalb von 60 min zutropfen und prüft den Reaktionsfortgang über zunehmende Brechungsindices. Unter portionsweiser Zugabe weiterer Mengen an Katalysatorlösung A (max. 3 g) ist nach 24 Stunden bei 40°C ein Brechungsindex von $n_D^{23°C}$ = 1,4672 erreicht, der einem NCO-Wert von 41,5 % entspricht. Man stoppt mit 0,1 g Dibutylphosphat ab. Anschließend trennt man das überschüssige HDI durch Dünnschichtdestillation (Typ "Kurzwegverdampfer") bei 120°C/0,1 mbar bis auf einen Restgehalt von 0,1 % ab und erhält 534 g eines klaren, farblosen Polyisocyanats mit folgenden Daten:
NCO-Gehalt: 22,6 %
Viskosität: 3000 mPa.s/23°C
Farbzahl (Hazen) nach DIN 53 409: 10

Beispiel 2

1680 g (10 Mol) HDI werden gemäß Beispiel 1 mit 8 g Katalysatorlösung B und nachfolgend portionsweise mit weiteren 2 g Katalysatorlösung B umgesetzt, bis ein Brechungsindex $n_D^{23°C}$ = 1,4708 erreicht ist, der einem NCO-Wert von 39,7 % entspricht. Nach Abstoppen und Aufarbeitung gemäß Beispiel 1 erhält man 633 g eines klaren, farblosen Polyisocyanats mit den Daten:
NCO-Gehalt: 22,2 %
Viskosität: 4300 mPa.s/23°C
Farbzahl (Hazen) nach DIN 53 409: 20

Beispiel 3

Eine Mischung von 336 g (2 Mol) HDI und 111 g (0,5 Mol) IPDI (Isophorondiisocyanat) wird unter Stickstoffatmosphäre auf 40°C erwärmt und nachfolgend innerhalb von 60 min mit 4 g Katalysatorlösung A versetzt. Unter portionsweiser Zugabe von weiterem 1 g Katalysatorlösung A ist nach 22 Stunden bei 40°C ein Brechungsindex $n_D^{23°C}$ = 1,4721 erreicht, NCO: 40,1 %. Nach Abstoppen und Aufarbeitung gemäß Beispiel 1 (Dünnschichtung bei 140°C/0,1 mbar) erhält man 121 g eines farblosen, klaren Polyisocyanats mit den Daten:
NCO-Gehalt: 21 %
Viskosität: 5400 mPa.s/23°C
Farbzahl (Hazen) nach DIN 53 409: 20

Aus der GC-Analyse des gedünnschichteten Destillats errechnet sich für das Polyisocyanat ein molares Verhältnis HDI:IPDI von 8:1.

Beispiel 4

1680 g (10 Mol) HDI werden unter Stickstoffatmosphäre bei 30°C mit 1,3 g Katalysator C versetzt und so lange bei 30°C gerührt, bis ein Brechungsindex von $n_D^{23°C}$ = 1,4634 erreicht ist, der einem NCO-Wert von 43,2 % entspricht (ca. 20 Stunden). Danach stoppt man den Reaktionsfortgang durch Zugabe von 20 g Calciumchlorid ab, rührt 1 h nach und filtriert vom Calciumchlorid und Katalysator ab. Nach Aufarbeitung gemäß Beispiel 1 erhält man 396 g eines klaren, farblosen Polyisocyanats mit den Daten:
NCO-Gehalt: 23,1 %
Viskosität: 2000 mPa.s/23°C
Farbzahl (Hazen) nach DIN 53 409: 30.

Beispiel 5

336 g (2 Mol) HDI werden unter Stickstoffatmosphäre bei 30°C mit 7 g Katalysatorlösung D innerhalb von 10 Minuten versetzt. Nach ca. 24 Stunden bei 30°C ist ein Brechungsindex von $n_D^{23°C}$ = 1,4785 erreicht, der einem NCO-Wert von 32,1 % entspricht. Man stoppt mit 0,1 g Trimethylchlorsilan ab. Nach Aufarbeitung gemäß Beispiel 1 erhält man 190 g eines klaren, farblosen Polyisocyanats mit den Daten:
NCO-Gehalt: 20,6 %
Viskosität: 9400 mPa.s/23°C
Farbzahl (Hazen) nach DIN 53 409: 20.

## Patentansprüche

1. Verfahren zur Herstellung von Isocyanuratgruppen aufweisenden Polyisocyanaten mit aliphatisch und/oder cycloaliphatisch gebundenen Isocyanatgruppen durch Trimerisierung eines Teils der Isocyanatgruppen von organischen Diisocyanaten mit aliphatisch und/oder cycloaliphatisch gebundenen Isocyanatgruppen in Gegenwart eines, die Trimerisierung beschleunigenden Katalysators und Abbruch der Trimerisierungsreaktion beim jeweils erwünschten Trimerisierungsgrad durch Zugabe eines Katalysatorgifts, dadurch gekennzeichnet, daß man als Katalysator quaternäre Ammoniumfluoride verwendet.

2. Verfahren gemäß Anspruch 1, dadurch gekennzeichnet, daß man nach Beendigung der Trimerisierungsreaktion nichtumgesetztes Ausgangsdiisocyanat durch Dünnschichtdestillation entfernt.

3. Verfahren nach Anspruch 1 und 2, dadurch gekennzeichnet, daß man als Katalysator N,N,N-Trimethyl-N-benzylammoniumfluorid oder Tetra-n-butylammoniumfluorid verwendet.

4. Verfahren gemäß Anspruch 1 bis 3, dadurch gekennzeichnet, daß man als organisches Diisocyanat 1,6-Diisocyanatohexan verwendet.

## Revendications

1. Procédé pour la préparation de polyisocyanates présentant des groupes isocyanurate, contenant des groupes isocyanate liés à des radicaux aliphatiques et/ou cycloaliphatiques, par trimérisation d'une partie des groupes isocyanate de diisocyanates organiques contenant des groupes isocyanate liés à des radicaux aliphatiques et/ou cycloaliphatiques, en présence d'un catalyseur accélérant la trimérisation et par arrêt de la réaction de trimérisation à chaque degré de trimérisation désiré, par addition d'un poison de catalyseur, **carac-**

**térisé en ce qu**'on utilise, comme catalyseur, des fluorures d'ammonium quaternaires.

2. Procédé selon la revendication 1, **caractérisé en ce que**, au terme de la réaction de trimérisation, on élimine le diisocyanate de départ n'ayant pas réagi, par distillation sur couche mince.

3. Procédé selon les revendications 1 et 2, **caractérisé en ce que**, comme catalyseur, on utilise le fluorure de N,N,N-triméthyl-N-benzylammonium ou le fluorure de tétra-n-butylammonium.

4. Procédé selon les revendications 1 à 3, **caractérisé en ce que**, comme diisocyanate organique , on utilise le 1, 6-diisocyanatohexane.

## Claims

1. A process for the production of isocyanurate polyisocyanates containing aliphatically and/or cycloaliphatically bound isocyanate groups by partial trimerization of the isocyanate groups of organic diisocyanates containing aliphatically and/or cycloaliphatically bound isocyanate groups in the presence of a catalyst accelerating the trimerization and termination of the trimerization reaction at the particular degree of trimerization required by addition of a catalyst poison, characterized in that quaternary ammonium fluorides are used as the catalyst.

2. A process as claimed in claim 1, characterized in that, on completion of the trimerization reaction, unreacted starting diisocyanate is removed by thin-layer distillation.

3. A process as claimed in claims 1 and 2, characterized in that N,N,N-trimethyl-N-benzyl ammonium fluoride or tetra-n-butyl ammonium fluoride is used as the catalyst.

4. A process as claimed in claims 1 to 3, characterized in that 1,6-diisocyanatohexane is used as the organic diisocyanate.